(19) Europäisches Patentamt
European Patent Office
Office européen des brevets

(11) Veröffentlichungsnummer: **0 200 886 A2**

(12) # EUROPÄISCHE PATENTANMELDUNG

(21) Anmeldenummer: **86103313.2**

(22) Anmeldetag: **12.03.86**

(51) Int. Cl.⁴: **B 01 F 3/04**

(30) Priorität: **04.05.85 DE 3516027**

(43) Veröffentlichungstag der Anmeldung: **12.11.86 Patentblatt 86/46**

(84) Benannte Vertragsstaaten: **BE CH DE FR GB IT LI NL**

(71) Anmelder: **HÜLS AKTIENGESELLSCHAFT, Patentabteilung / PB 15 - Postfach 13 20, D-4370 Marl 1 (DE)**

(72) Erfinder: **Bollenrath, Franz Michael, Dr., Lipper Weg 197, D-4370 Marl (DE)**

(54) **Rührsystem und Verfahren zum Begasen von Flüssigkeiten.**

(57) Die Erfindung betrifft ein Rührsystem zur Begasung von Flüssigkeiten, das aus folgenden Teilen besteht:

1. Ein stehender Rührkessel mit mindestens einem Stromstörer,
2. ein Leitrohr,
3. eine Rührwelle mit wenigstens zwei Rührern, von denen einer am oberen und einer am unteren Ende des Leitrohres angebracht ist.

Nach dem Verfahren zum Begasen einer Flüssigkeit mit Hilfe dieses Rührsystems wird der Rührkessel soweit mit der zu begasenden Flüssigkeit gefüllt, daß der Flüssigkeitsspiegel oberhalb der Oberkante des Leitrohres und oberhalb der Unterkante des bzw. der Stromstörer liegt.

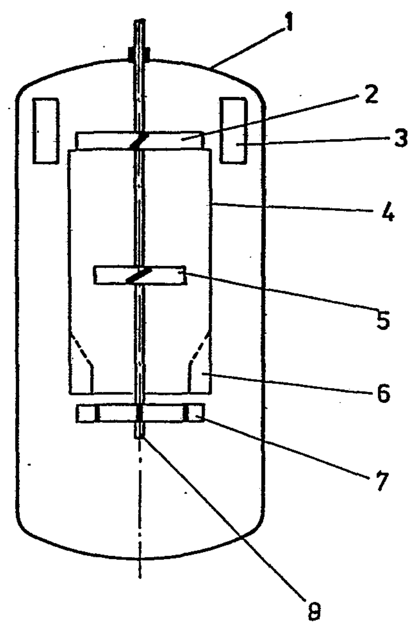


EP 0 200 886 A2

## Rührsystem und Verfahren zum Begasen von Flüssigkeiten

Die vorliegende Erfindung betrifft ein Verfahren zum Begasen von Flüssigkeiten sowie ein Rührsystem zur Durchführung dieses Verfahren.

Es sind grundsätzlich zwei Arten von Rührsystemen zur Begasung von Flüssigkeiten bekannt:

1. Rührsysteme mit Fremdbegasung

   Die Gaszufuhr erfolgt durch ein einfaches Rohr oder einen Dispergierring, dessen Öffnungen sich im unteren Teil des Rührkessels befinden. Mit Hife eines Rührers (z. B. Scheiben-, Schrägblatt- oder Intermigrührer) wird das austretende Gas in der Flüssigkeit verteilt. Nachteilig ist jedoch, daß man grundsätzlich eine Pumpe benötigt, die mindestens den Druck der Flüssigkeitssäule überwinden muß. Schaltet man den Gasstrom ab, kann die Flüssigkeit in das Dispergiersystem eindringen. Ungünstig ist ferner, daß der Rührer - insbesondere bei hoher Gasbelastung - leicht "überflutet" wird; d. h. der Rührer ist nicht in der Lage, das austretende Gas vollständig zu dispergieren. Es kommt zu stoßartigen Belastungen des gesamten Rührwerkes und damit zu einem erhöhten Verschleiß.

2. Selbstansaugende Rührsysteme

   Man nutzt die Tatsache aus, daß im Rührbetrieb an den schrägen Rührflächen eines Rührers ein Unterdruck auftritt. Führt man dem Rührer nun durch die Rührwerke, die als Rohr ausgebildet sind, ein Gas zu, so tritt dies infolge Selbstansaugung an den Rührflächen wieder aus.

(Vgl. M. Zlokarnik "Rührtechnik" in Ullmanns Encyklopädie der technischen Chemie, 4. Auflage, Band 2, Verlag Chemie, Weinheim 1972, S. 259 ff., insbesondere Seiten 275 bis 278). Das Ystral-System beruht darauf, daß bei entsprechender Rührerdrehzahl in der Mitte eines Rührwerkes ebenfalls ein derartiger Unterdruck gebildet wird, daß Gas austreten kann.

Bei den selbstansaugenden Systemen ist eine vergleichsweise hohe Rührleistung erforderlich, um eine befriedigende Gasdispersion zu erreichen. Dies gilt insbesondere für den Fall, daß ein erheblicher Höhenunterschied zwischen der Flüssigkeitsoberfläche und dem Rührer besteht. Aufgrund physikalischer Gesetzmäßigkeiten ist der maximal zu überwindende Höhenunterschied begrenzt.

Es ist andererseits bekannt, einen Rührkessel mit einem Leitrohr und einem Propellerrührer, der sich üblicherweise innerhalb des Leitrohres befindet, auszustatten, um einen besseren axialen Fluß innerhalb des Rührkessels zu erzielen. Derartige Systeme weren beispielsweise zur Erzeugung und Aufrechterhaltung von Fest-flüssig- und Flüssig-flüssig-Systemen eingesetzt (vgl. V. W. Uhl, J. B. Gray "Mixing", Vol. II, Academic Press, New York, London, 1967, S. 247 ff.). Leitrohre werden üblicherweise dann eingesetzt, wenn man in zylindrischen Behältern eine Trombenbildung weitgehend unterdrücken will, d. h. wenn man bei guter axialer Durchmischung den Einzug vom Gas in die Flüssigkeit möglichst vermeiden will. Rührsysteme mit Leitrohr schienen daher zur Begasung von Flüssigkeiten nicht geeignet zu sein.

Schwierigkeiten bei der Begasung von Flüssigkeiten treten insbesondere dann auf, wenn das Aufnahmevermögen der Flüssigkeit für das Gas vergleichsweise klein oder wenn das Gas-Flüssig-System koaleszierend ist. In diesen Fällen ist es - zur Ausnutzung des Gases - erforderlich, das von der Flüssigkeit nicht aufgenommene Gas aufzufangen und erneut der Flüssigkeit zuzuführen. Problematisch wird es auch immer dann, wenn die zu begasende

Flüssigkeit während der Begasung ihre Stoffeigenschaften erheblich verändert.

Ziel der vorliegenden Erfindung war es, ein Rührsystem zu entwickeln, das folgende Eigenschaften aufweisen sollte:

1. Es sollte ohne Kreisgas gearbeitet werden.

2. Es sollten Überflutungszustände vermieden werden können.

3. Es sollte möglich sein, eine Flüssigkeit mit einem Höhenunterschied von mindestens 2 m gleichmäßig zu begasen.

4. Es sollten auch koaleszierende Systeme über einen längeren Zeitraum begast werden können.

5. Es sollte in bereits verhandene stehende Rührkessel üblicher Bauart auch nachträglich einbaubar sein.

Es wurde jetzt ein Rührsystem gefunden, das diesen Zielen gerecht wird. Es besteht aus einem stehenden Rührkessel, einem Leitrohr, einer Rührwelle mit wenigstens zwei Rührern und mindestens einem Stromstörer. Die Einzelheiten gehen aus den nachfolgenden Ausführungen sowie aus den Ansprüchen 1 bis 10 hervor.

Gegenstand dieser Erfindung sind ferner die Verfahren zum Begasen einer Flüssigkeit gemäß den Ansprüchen 11 bis 15.

Die Form des Rührkessels in unkritisch; üblicherweise wird ein zylindrischer Behälter verwendet.

Das Leitrohr hat eine zylindrische oder konische Form und ist koaxial in dem Rührkessel angebracht. Sein Durchmesser d am oberen Ende unterliegt vorzugsweise der Beziehung $1/3\ D < d < 2/3\ D$, wobei D der Druckmesser des Rührkessels an dieser Stelle ist. Für den Abstand l des Leitrohres vom Rührkesselboden gilt vorzugsweise die Beziehung $0{,}3\ D < l < 0{,}5\ D$.

Bei Reaktionen, die mit hoher Wärmetönung ablaufen, ist es vielfach wünschenswert, neben der Außenkühlung weitere Kühlflächen vorzusehen. Das Leitrohr kann als eine solche zusätzliche Wärmeaustauscherfläche dienen. Dies ist besonders vorteilhaft, da der Wärmeübergang an dieser Stelle wegen der hochturbulenten Strömung besonders gut ist.

Es hat sich als günstig erwiesen, Leitbleche in das Leitrohr einzubauen. Auf diese Weise kann die Wirksamkeit der Begasung noch erhöht werden.

Auf der Rührwelle müssen mindestens zwei Rührer angebracht sein.

Der obere Rührer hat vorzugsweise die Eigenschaften eines Schrägblattrührers. Er wird unterhalb der Oberkante des Leitrohres auf der Rührwelle angebracht und zwar so, daß die Förderrichtung nach unten weist. Der Durchmesser r dieses Rührers unterliegt vorzugsweise der Beziehung $0,2\ d < r < 0,95\ d$.

Der untere Rührer ist im unteren Teil des Leitrohres, vorzugsweise jedoch unterhalb des Leitrohres angebracht. Im ersten Fall wird üblicherweise ein axialfördernder Rührer eingesetzt. Im letzteren Fall kommt ein radialfördernder Rührer (z. B. ein Scheiben- oder Impellerrührer) infrage. Der Abstand von der Unterkante des Leitrohres sollte möglichst klein sein.

Bei koaleszierenden Systemen sowie bei Systemen mit hoher Flüssigkeitssäule empfiehlt es sich, einen oder mehrere weitere Rührer (z. B. Propellerrührer, Schrägblattrührer) zwischen dem oberen und unteren Rührer anzubringen.

Erfindungswesentlich sind ferner der oder die Stromstörer. Sie sind in einer solchen Höhe des Rührkessels angebracht, daß zumindest ihre Oberkante, vorzugsweise aber auch ihre Unterkante, oberhalb der Oberkante des Leitrohres liegen.

Für die Durchführung des Verfahrens ist es sinnvoll, den Rührkessel soweit mit der zu begasenden Flüssigkeit zu füllen, daß die Oberfläche der nicht gerührten Flüssigkeit knapp unterhalb, in gleicher Höhe oder oberhalb der Oberkante des Leitrohres liegt. Gleichzeitig soll zumindest die Unterkante des bzw. der Strömstörer in die Flüssigkeit eintauchen. Im Rührbetrieb sollte im Rührkessel darüber stets noch ein Gasraum vorhanden sein. Die Gaszufuhr erfolgt vorteilhafterweise innerhalb des unteren Leitrohrendes, da dann der Weg bis zur Dispergierung in der Flüssigkeit sehr kurz ist. Wird das Gas abgestellt, kann es zu einem Eindringen der Flüssigkeit in das Begasungssystem kommen. Sollte dies nachteilig sein, so kann die Gaszufuhr auch selbstverständlich vom oberen Gasraum aus vorgenommen werden.

Das vorliegende Verfahren kann immer dann vorteilhaft eingesetzt werden, wenn eine Flüssigkeit sich nur mit Schwierigkeiten begasen läßt.

Beispielhaft seien hier erwähnt:

1. Die oxidative Kupplung von in o-Stellung disubstituierten Phenolen zu Polyphenylenethern (vgl. z. B. Bühler, "Spezialplaste", Akademieverlag 1978, DE-OS 32 24 692).

2. Die Sulfoxidation von Paraffinen nach dem Licht-Wasser-Verfahren gemäß nachfolgender schematischer Reaktionsgleichung

   $RH + 2SO_2 + O_2 + H_2O \longrightarrow R - SO_3H + H_2SO_4$

   $R - SO_3H + NaOH \longrightarrow RSO_3Na + H_2O$

   (vgl. Ullmanns Encyklopädie der technischen Chemie, 4. Auflage, Band 22, Seiten 478 ff., 1982).

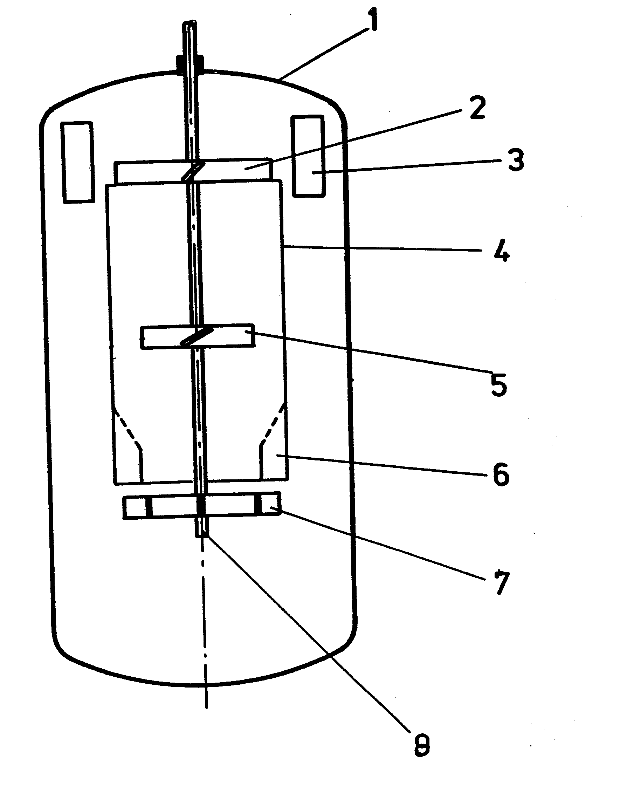

Die Abbildung zeigt eine Ausführungsform des erfindungsgemäßen Reaktors.

**Beispiel 1**

Diskontinuierliche Polymerisation von 2,6-Dimethylphenol zum Polyphenylenether

Katalysatorherstellung:

Man löst 15,6 g $CuCO_3$ $Cu(OH)_2$ in 46 g 48 %iger Bromwasserstoffsäure auf und gibt die erhaltene homogene Lösung unter Rühren zu 240 g Morpholin.

In einem Reaktor von 10 l Inhalt werden 252 g der Katalysatorlösung, 8 280 g Toluol, 1 318 g Methanol sowie 1 910 g einer 50 %igen Lösung von 2,6-Dimethylphenol in Toluol vorgelegt. Anschließend werden 39,4 g Sauerstoff innerhalb von 1 Stunde eingeführt. Der Reaktor wird mit einem dreistufigen Rührer in einem Leitrohr bei einer Drehzahl von 400 $min^{-1}$ gerührt. Es wird kein Gas abgeführt. Anschließend wird die Reaktion auf übliche Weise durch Zugabe von Essigsäure abgestoppt (vgl. z. B. gemäß DE-OS 33 13 864.8).

**Beispiel 2**

Sulfoxidation nach dem Licht-Wasser-Verfahren

In einen Reaktor (vgl. Abbildung) ausgerüstet mit mehreren Quecksilberhochdruckbrennern und einem Gesamtvolumen von 280 l, werden kontinuierlich einerseits Wasser und Frischparaffin, andererseits $SO_2$ und $O_2$ eingeleitet. Das den Reaktor verlassende Gemisch besteht aus 25 Teilen Paraffin und einem Teil wäßriger Phase. Dieses Gemisch wird einem Abscheider zugeführt. Es entfällt der Kreisgasstrom. Es tritt kein Abgas auf.

Erläuterungen zur Abbildung

1 Rührgefäß
2 oberer Rührer
3 Stromstörer oben
4 Leitrohr
5 Transportrührer
6 Leitbleche
7 unterer Rührer
8 Rührerwelle

Patentansprüche:

1. Rührsystem zur Begasung von Flüssigkeiten, bestehend aus einem stehenden Rührkessel, einem Leitrohr sowie einer Rührwelle mit Rührer,
dadurch gekennzeichnet,
daß die Rührwelle wenigstens zwei Rührer, und zwar jeweils einen am oberen und unteren Ende des Leitrohres trägt und mindestens ein Strömstörer in einer solchen Höhe des Rührkessels angebracht ist, daß zumindest die Oberkante des Strömstörers über das obere Ende des Leitrohres hinausragt.

2. Rührsystem nach Anspruch 1,
dadurch gekennzeichnet,
daß die Unterkante des bzw. der Strömstörer oberhalb der Oberkante des Leitrohres liegt.

3. Rührsystem nach Anspruch 1 oder 2,
dadurch gekennzeichnet,
daß der Durchmesser des Leitrohres an seinem oberen Ende 1/3 bis 2/3 D beträgt, wobei D der Durchmesser des Rührkessels ist.

4. Rührsystem nach den Ansprüchen 1 bis 3,
dadurch gekennzeichnet,
daß für den Abstand l des Leitrohres vom Rührkesselboden die Beziehung $0,3\,D < l < 0,50$ gilt, wobei D wiederum der Durchmesser des Rührkessels ist.

5. Rührsystem nach den Ansprüchen 1 bis 4,
dadurch gekennzeichnet,
daß der untere Rührer 1/2 bis 1/3 D vom Rührkesselboden entfernt ist.

6. Rührsystem nach den Ansprüchen 1 bis 5, dadurch gekennzeichnet, daß der obere Rührer ein Dispergierrührer (z. B. Scheibenrührer, Schrägblattrührer) ist.

7. Rührsystem nach den Ansprüchen 1 bis 6, dadurch gekennzeichnet, daß der untere Rührer möglichst dicht unterhaalb des Leitrohrendes angebracht ist und ein radialfördernder Rührer (z. B. Scheibenrührer, Impellerrührer) ist.

8. Rührsystem nach den Ansprüchen 1 bis 7, dadurch gekennzeichnet, daß die Rührwelle innerhalb des Leitrohres mit zusätzlichen axialfördernden Rührern (z. B. Propellerrührer, Schrägblattrührer) ausgestattet ist.

9. Rührsystem nach den Ansprüchen 1 bis 8, dadurch gekennzeichnet, daß das Leitrohr als Kühler ausgebildet ist.

10. Rührsystem nach den Ansprüchen 1 bis 9, dadurch gekennzeichnet, daß das Leitrohr zwischen dem oberen und unteren Rührer Leitbleche trägt.

11. Verfahren zum Begasen einer Flüssigkeit mit Hilfe eines Rührsystems nach den Ansprüchen 1 bis 10, dadurch gekennzeichnet, daß man den Rührkessel soweit mit der zu begasenden Flüssigkeit füllt, daß der Flüssigkeitsspiegel oberhalb der Oberkante des Leitrohres und oberhalb der Unterkante des bzw. der Strömstörer liegt.

12. Verfahren nach Anspruch 11, dadurch gekennzeichnet, daß der Rührkessel nur soweit mit der zu begasenden Flüssigkeit gefüllt wird, daß im Betrieb stets noch ein überstehender Gasraum vorhanden ist.

13. Verfahren nach den Ansprüchen 11 oder 12, dadurch gekennzeichnet, daß die Gaszufuhr innerhalb des unteren Leitrohrendes erfolgt.

14. Verfahren nach den Ansprüchen 11 bis 13, dadurch gekennzeichnet, daß man eine Lösung eines 2,6-Dialkylphenols in einem organischen Lösemittel, die zusätzlich einen Kupferaminkatalysator und gegebenenfalls einen Aktivator enthält, mit $O_2$-haltigen Gasgemischen, vorzugsweise mit Sauerstoff, begast.

15. Verfahren nach den Ansprüchen 11 bis 14, dadurch gekennzeichnet, daß man ein Gemisch aus Paraffin und Wasser mit einem Gemisch aus Schwefeldioxid und Sauerstoff begast.

0200886

1/1